# FASCICULE DE BREVET EUROPEEN

(11) **EP 4 310 475 B1**
(45) Date de publication et mention de la délivrance du brevet: **29.10.2025**
(21) Numéro de dépôt: 23186250.9
(22) Date de dépôt: 18.07.2023
(51) Int. Cl.: G01N 3/06, G01N 3/08, G01N 3/10

(54) **APPAREILLAGE POUR LA REALISATION D'ESSAIS SUR UN ECHANTILLON DE MATERIAU**
VORRICHTUNG ZUR DURCHFÜHRUNG VON TESTS AUF EINER MATERIALPROBE
APPARATUS FOR CARRYING OUT TESTS ON A SAMPLE OF MATERIAL

(30) Priorité: 20.07.2022 FR 2207458
(43) Date de publication de la demande: 24.01.2024
(73) Titulaire: UNIVERSITE DE BORDEAUX, 33000 Bordeaux (FR); INSTITUT POLYTECHNIQUE DE BORDEAUX, 33400 Talence (FR); CENTRE NATIONAL DE LA RESEARCH SCIENTIFIQUE, 75016 Paris (FR); ECOLE NATIONALE SUPERIEURE D'ARTS ET METIERS, 75013 Paris (FR)
(72) Inventeur: VIOT, Philippe, 33405 TALENCE (FR)
(74) Mandataire: Cabinet Boettcher

(56) Documents cités:
- WO-A1-2017/076343
- US-A- 3 975 950

## Description

La présente invention concerne le domaine des appareillages pour la caractérisation d'échantillons de matériaux.

Il est connu de caractériser la résistance à la compression ou à la traction de matériaux en appliquant des efforts sur des échantillons de ces matériaux et en caractérisant leurs réponses en termes de contraintes et/ou de déformations. Il a été observé que certains matériaux compressibles, comme des matériaux comportant des porosités, ont des caractéristiques mécaniques qui varient en fonction de la pression hydrostatique de l'environnement où se trouve le matériau. Il existe un besoin de caractériser le comportement de matériaux en prenant en compte la pression hydrostatique dans le matériau pour pouvoir anticiper son comportement dans un environnement donné où le matériau est soumis à des contraintes mécaniques et/ou hydrostatiques particulières. Toutefois, la caractérisation d'un matériau en fonction de la pression hydrostatique de son environnement est particulièrement complexe et couteuse à réaliser. Des appareillages pour la réalisation d'essais sont par exemple présentés dans les documents US3975950A et WO2017/076343A1.

### OBJET DE L'INVENTION

Un objet de la présente invention est de fournir un appareillage pour la réalisation d'essais sur un échantillon de matériau permettant de résoudre certains au moins des défauts de l'art antérieur précité.

### RESUME DE L'INVENTION

A cet effet, on prévoit, selon l'invention un appareillage pour la réalisation d'essais sur un échantillon de matériau, l'appareillage comprenant :
- une chambre délimitée extérieurement par une paroi de chambre et dans laquelle est aménagée une zone de réception dudit échantillon de matériau ;
- au moins une tête mobile par rapport à ladite paroi de chambre, la tête étant mobile entre une première position dans laquelle la tête mobile est à l'écart de la zone de réception d'échantillon et une seconde position dans laquelle la tête mobile se trouve dans la zone de réception d'échantillon pour appliquer des efforts sur l'échantillon.

L'appareillage selon l'invention comporte un circuit hydraulique et un dispositif de vannage hydraulique adoptant sélectivement une configuration d'isolement de la chambre dans laquelle la chambre est hermétique et une configuration d'évacuation de fluide hors de la chambre dans laquelle du fluide peut être évacué hors de la chambre via ledit circuit hydraulique, l'appareillage comportant également au moins un capteur d'effort agencé pour mesurer des efforts appliqués sur l'échantillon se trouvant dans la zone de réception d'échantillon et au moins un capteur de pression agencé pour mesurer une pression hydraulique à l'intérieur de la chambre.

L'appareillage selon l'invention permet de tester / caractériser des comportements mécaniques d'un échantillon de matériau se trouvant dans un environnement contrôlé, c'est à dire dans la chambre, où l'on peut précisément mesurer et contrôler :
- les efforts appliqués sur l'échantillon ; et
- la pression hydrostatique appliquée sur l'échantillon ; et
- toute combinaison, variation temporelle, des efforts et de pressions hydrostatiques appliqués sur l'échantillon.

L'appareillage selon l'invention est ainsi particulièrement adapté pour caractériser les propriétés mécaniques d'un matériau, préférentiellement un matériau poreux ou un matériau compressible, lorsqu'il est soumis à des efforts donnés / contrôlés et à une pression hydrostatique donnée / contrôlée, avant, pendant ou après l'application desdits efforts.

Les effets de la variation de pression hydrostatique sur le comportement mécanique du matériau peuvent ainsi être précisément caractérisés de manière particulièrement économique.

La tête mobile dans la chambre permet de faire varier les efforts appliqués sur l'échantillon, la pression hydrostatique ambiante dans la chambre étant maîtrisée grâce au circuit hydraulique et au dispositif de vannage hydraulique. Le séquencement maitrisé du déplacement de la tête mobile et de la pression hydrostatique est utile pour induire des déformations de l'échantillon en hauteur et/ou en volume et pour caractériser la réaction du matériau constitutif de l'échantillon en fonction des efforts qu'il transmet et de la pression hydrostatique du milieu où il se trouve.

Le capteur d'effort permet de mesurer des efforts appliqués sur l'échantillon par la tête mobile, des efforts de réaction de l'échantillon et le capteur de pression permet de mesurer la pression dans la chambre ce qui permet de caractériser l'influence de ces sollicitations sur la déformation de l'échantillon.

Dans un mode de réalisation préférentiel de l'invention, l'appareillage comporte un butoir placé dans la chambre, le butoir et ladite au moins une tête mobile étant disposés de part et d'autre de la zone de réception d'échantillon pour pouvoir sélectivement compresser ledit échantillon entre le butoir et ladite au moins une tête mobile, ledit au moins un capteur d'effort étant disposé pour mesurer une force d'appui de l'échantillon contre le butoir.

De cette manière le capteur d'efforts est précisément positionné par rapport au butoir qui est dans la chambre ce qui améliore la reproductibilité des mesures d'effort.

Préférentiellement, ce butoir présente une face plane d'appui de l'échantillon telle que le contact entre l'échantillon et le butoir soit exclusivement localisé sur cette face plane.

Ceci facilite la caractérisation du comportement de l'échantillon à l'endroit de son contact avec le butoir. Idéalement, ce butoir a la forme d'un plateau.

Selon l'invention :
- ladite au moins une tête mobile est portée à l'extrémité d'une tige coulissante qui coulisse à étanchéité, c'est-à-dire de manière étanche, au travers de la paroi de la chambre ;
- une surface d'étanchéité est portée par la tige coulissante ; et
- une sortie de fluide est pratiquée au travers de la paroi de la chambre, la surface d'étanchéité étant agencée :
- d'une part pour que sur une première partie de course de la tige coulissante, la surface d'étanchéité autorise le passage de fluide via la sortie de fluide, le dispositif de vannage hydraulique étant alors en configuration d'évacuation de fluide hors de la chambre ; et
- d'autre part pour que sur une seconde partie de course de la tige coulissante, ladite surface d'étanchéité interdise le passage de fluide via la sortie de fluide, le dispositif de vannage hydraulique étant alors en configuration d'isolement de la chambre.

L'invention est particulièrement avantageuse et économique à mettre en œuvre puisque la tige coulissante qui porte la tête mobile est d'une part utilisée pour déplacer la tête mobile et faire varier les efforts appliqués sur l'échantillon (par exemple en imposant une variation de hauteur de l'échantillon) et d'autre part utilisée comme élément de vannage pour sélectivement fermer la sortie de fluide de la chambre et ainsi permettre la variation de la pression hydrostatique (avec une variation du volume de la chambre) en fonction du déplacement de la tige et/ou des efforts appliqués sur cette tige.

Cette simplicité de conception est favorable à une reproductibilité des déformations ou contraintes successivement appliquées sur l'échantillon de matériau testé.

Ainsi, l'appareillage selon l'invention permet une parfaite reproductibilité des conditions de test successivement mis en œuvre pour tester un échantillon ou une série d'échantillons.

Préférentiellement, la paroi de la chambre comporte plusieurs paires de hublots, les hublots d'une paire de hublots étant placés de part et d'autre de la zone de réception d'échantillon et chaque hublot étant agencé pour visualiser au travers du hublot, depuis l'extérieur de la chambre, un échantillon se trouvant dans la zone de réception d'échantillon. Chacun de ces hublots est transparent et résistant au différentiel de pression appliqué entre l'intérieur et l'extérieur de la chambre.

De cette manière les variations dimensionnelles de l'échantillon dans la chambre peuvent être mesurées en réalisant des observations de l'échantillon, au travers du / des hublots, depuis l'extérieur de la chambre.

Selon un autre aspect, l'invention porte sur un ensemble comportant :
- un banc d'essai ; et
- un appareillage selon l'une quelconque des modes de réalisation de l'appareillage selon l'invention ; ledit appareillage étant fixé de manière amovible sur une base appartenant au banc d'essai et le banc d'essai comprenant un actionneur pour forcer le déplacement de ladite tête mobile par rapport à la paroi de chambre.

Ce mode de réalisation de l'ensemble selon l'invention est particulièrement utile car il permet d'ajouter à n'importe quel banc d'essai de résistance mécanique de matériaux, une capacité de tester des matériaux sous pression hydrostatique variable et contrôlée.

L'appareillage constitue un outillage pouvant être assemblé sur le banc d'essai de manière à utiliser l'actionneur du banc d'essai pour appliquer les efforts sur l'échantillon et pour faire varier la pression hydrostatique dans la chambre.

Ce mode de réalisation est particulièrement économique à mettre en œuvre.

D'autres caractéristiques et avantages de l'invention ressortiront à la lecture de la description qui suit d'un mode de réalisation particulier et non limitatif de l'invention.

### BREVE DESCRIPTION DES DESSINS

Il sera fait référence aux dessins annexés, parmi lesquels :

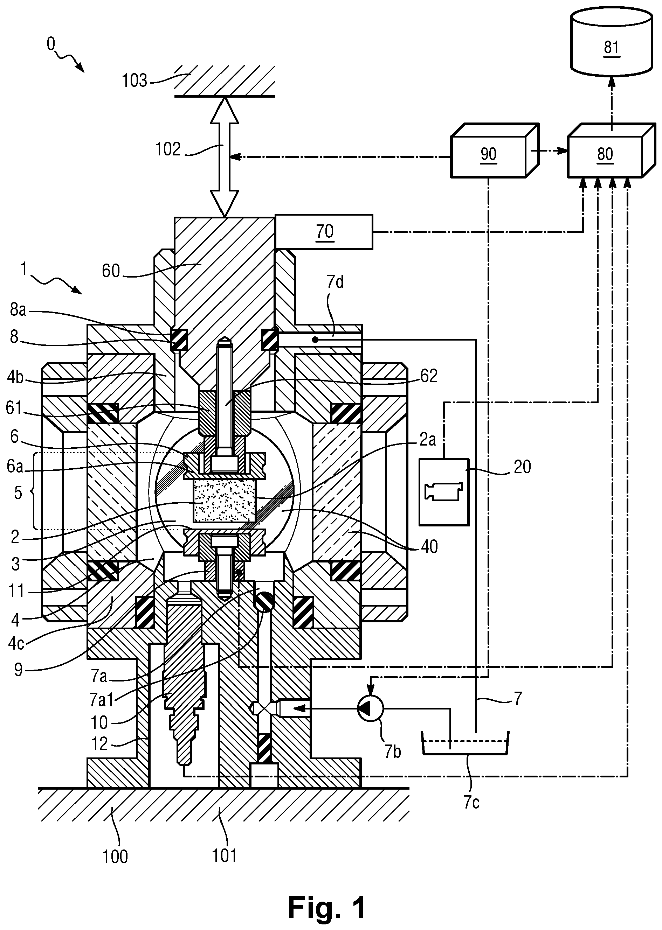

[Fig. 1] la figure 1 présente un ensemble 0 selon l'invention comprenant un banc d'essai doté d'un actionneur 102, en l'occurrence un vérin, l'appareillage 1 selon l'invention étant assemblé sur ce banc d'essai pour tester un échantillon 2 placé dans la chambre 3 de l'appareillage 1, en l'occurrence dans une zone de réception 5 de l'échantillon ;

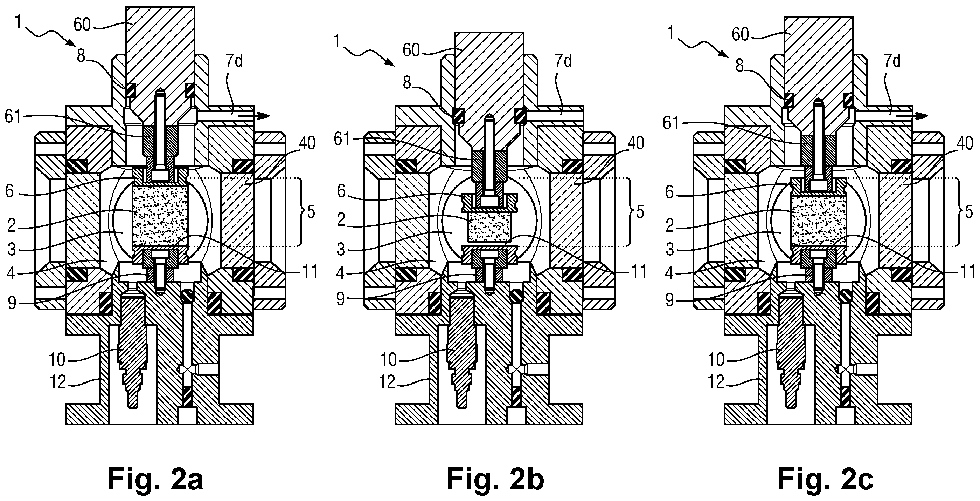

[Fig. 2a] la figure 2a présente l'appareillage 1 selon l'invention illustré à la figure 1 alors qu'il est utilisé pour exercer un effort de compression uni axiale sur un échantillon afin de le déformer, la chambre 3 étant ouverte au niveau de la sortie de fluide 7d pour que le fluide présent dans la chambre puisse s'échapper librement alors que les efforts de compression appliqués par la tête mobile 6 sur l'échantillon 2 varient (dans cette configuration de l'appareillage, la pression hydrostatique dans la chambre reste invariante / constante, par exemple égale à un atmosphère) ;
[Fig. 2b] la figure 2b présente l'appareillage 1 selon l'invention illustré à la figure 1 alors qu'il est utilisé pour compresser l'échantillon de matériau compressible poreux 2 uniquement par variation de la pression hydrostatique dans la chambre 3, par déplacement de la tige coulissante 60 et sans application d'efforts de compression uni axiale via la tête mobile 6, on étudie ici le comportement de l'échantillon sous l'effet de la seule variation de pression hydrostatique qui est mesurée ;
[Fig. 2c] la figure 2c présente l'appareillage 1 selon l'invention illustré à la figure 1 alors qu'il est utilisé pour compresser l'échantillon de matériau 2 en deux étapes successives, la première étape consistant en une déformation uni axiale de l'échantillon par compression de l'échantillon entre la tête mobile 6 et le butoir 11 sous pression hydrostatique constante dans la chambre et la seconde étape combinant la déformation uni axiale de l'échantillon par compression de l'échantillon 2 entre la tête 6 et le butoir 11 et une déformation par variation (augmentation) de la pression hydrostatique dans la chambre 3 (cette seconde étape permet une application de contrainte mixte sur l'échantillon) ;

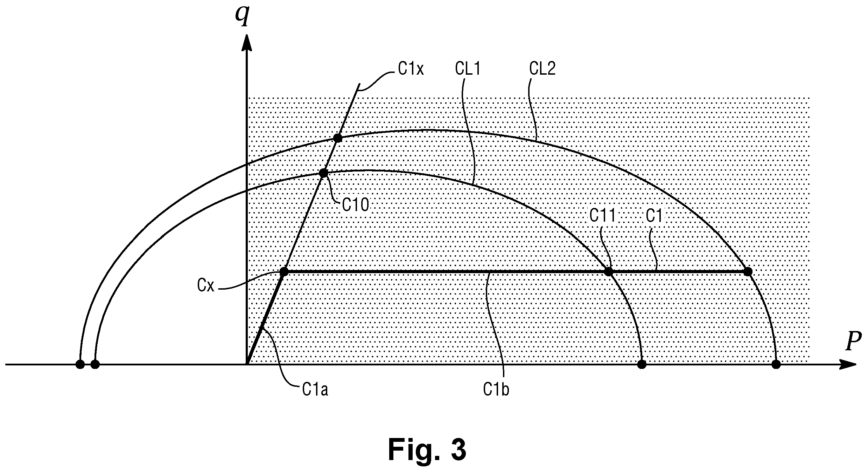

[Fig. 3] la figure 3 illustre l'application sur l'échantillon 2 d'un chemin de chargement imposé C1 à l'aide de l'appareil 1 selon l'invention, cet essai avec le chemin de chargement imposé C1 permet de définir des courbes théoriques limites CL1, CL2 qui, par exemple caractérisent respectivement des limite élastique et plastique de l'échantillon 2 en fonction de valeurs de contrainte en cisaillement q dans le matériau de l'échantillon et en fonction de valeurs de pression hydrostatique p dans le matériau de l'échantillon (plusieurs essais en suivant des chemins de chargement différents permettent de définir avec précision la forme des courbes CL1, CL2 pour caractériser le comportement théorique du matériau de l'échantillon).

### DESCRIPTION DETAILLEE DE L'INVENTION

Selon un premier aspect, l'invention concerne un appareillage 1 pour la réalisation d'essais sur un échantillon de matériau 2, cet appareillage 1 étant illustré sur les figures 1, 2a, 2b, 2c.

Selon un second aspect, l'invention concerne un ensemble 0, illustré sur la figure 1, cet ensemble 0 comportant un banc d'essai 100 et un appareillage 1 selon l'invention, l'appareillage 1 étant fixé de manière amovible sur une base 101 appartenant au banc d'essai 100 et le banc d'essai 100 comprenant un actionneur 102 pour forcer le déplacement d'une tête mobile 6 de l'appareillage 1 par rapport à la paroi 4 de chambre 3 de l'appareillage 1.

L'ensemble 0 selon l'invention peut également comprendre un échantillon de matériau 2 disposé dans la zone de réception d'échantillon 5.

Dans un mode de réalisation particulier et préférentiel de l'ensemble 0 selon l'invention, l'échantillon 2 est entouré d'une gaine 2a de protection de l'échantillon, ladite gaine 2a étant déformable et s'opposant au passage de fluide hydraulique (typiquement de l'eau) vers l'intérieur de l'échantillon.

La déformation de la gaine entraîne une variation du volume de l'échantillon qui est de nature compressible éventuellement poreuse de telle manière que la pression hydrostatique dans l'échantillon varie en fonction des efforts appliqués sur la gaine par la tête mobile et/ou par la pression hydrostatique ambiante dans la chambre.

La gaine permet d'éviter que le fluide présent dans la chambre ne pénètre dans l'échantillon au risque d'en modifier son comportement mécanique.

Ainsi, dans le cas où l'échantillon est de la matière sèche, comme une capsule de lessive sèche agglomérée ou un cachet sec médicamenteux, la gaine permet d'éviter que le fluide hydraulique présent dans la chambre n'entraîne une dissolution de l'échantillon et une modification des caractéristiques mécaniques de l'échantillon.

De même, si l'échantillon est un bloc de mousse, la gaine permet d'éviter que le fluide hydraulique présent dans la chambre ne pénètre dans les cellules de la mousse et en modifie le comportement mécanique.

Cette gaine est par exemple en latex.

En résumé, l'usage d'une telle gaine déformable permet de caractériser le comportement mécanique du matériau de l'échantillon sous une pression hydrostatique donnée sans que le fluide hydraulique ne dégrade l'échantillon.

L'appareillage 1 selon l'invention comprend :
- une chambre 3 délimitée extérieurement par une paroi métallique 4 de chambre 3 et dans laquelle est aménagée une zone de réception 5 de l'échantillon de matériau 2 ;
- au moins une tête mobile 6 par rapport à ladite paroi de chambre 4 entre une première position dans laquelle la tête mobile 6 est à l'écart de la zone de réception d'échantillon 5 et une seconde position dans laquelle la tête mobile 6 se trouve dans la zone de réception d'échantillon 5 pour appliquer des efforts sur l'échantillon 2.

La paroi 4 de la chambre est rigide pour limiter la déformation de la paroi pendant la réalisation des essais sur l'échantillon.

L'appareillage 1 comporte un circuit hydraulique 7 et un dispositif de vannage hydraulique 8 adoptant sélectivement :
- une configuration d'isolement de la chambre 3 dans laquelle la chambre est hermétique (par hermétique on entend que la chambre est close, c'est à dire hermétiquement fermée pour y retenir les fluides) ; et
- une configuration d'évacuation de fluide hors de la chambre 3 dans laquelle du fluide peut être évacué hors de la chambre via ledit circuit hydraulique 7.

Les figures 1 et 2b présentent le dispositif de vannage hydraulique 8 alors qu'il est en configuration d'isolement de la chambre 3, la chambre étant hermétique.

Les figures 2a et 2c présentent le dispositif de vannage hydraulique 8 alors qu'il est en configuration d'évacuation de fluide de manière à ce que le fluide contenu dans la chambre 3 puisse être évacué via le circuit hydraulique 7 et plus particulièrement via une sortie de fluide 7d qui est pratiquée au travers de la paroi 4 de la chambre et qui appartient au circuit hydraulique 7.

Ici, le dispositif de vannage hydraulique 8 comprend un joint annulaire qui est porté par une tige coulissante 60 qui coulisse à étanchéité au travers de la paroi 4 de la chambre 3.

En fonction de la position de coulissement de la tige 60 par rapport à la paroi 4 de la chambre, le joint est :
- soit placé entre la chambre 3 et la sortie de fluide 7d pour réaliser une étanchéité glissante s'opposant au passage de fluide de la chambre 3 vers la sortie de fluide 7d (le dispositif de vannage hydraulique 8 étant alors en configuration d'isolement de la chambre 3 comme sur les figures 1 et 2b) ;
- soit placé pour dans un passage d'insertion de la tige 60 vers la chambre pour réaliser une étanchéité glissante s'opposant au passage de fluide de la chambre vers le passage d'insertion de la tige et pour autoriser le passage de fluide de la chambre 3 vers la sortie de fluide 7d (le dispositif de vannage hydraulique 8 étant alors en configuration d'évacuation de fluide hors de la chambre 3 comme illustré sur les figures 2a et 2c).

Dans le mode de réalisation illustré aux figures 1 à 2c, le passage d'insertion de la tige comporte une rainure annulaire interne dans laquelle débouche la sortie de fluide 7d, cette rainure annulaire étant chanfreinée à ses extrémités terminales pour faciliter le coulissement du joint du système de vannage 8 lorsqu'il est en regard de la rainure annulaire.

Ainsi, lorsque le joint du système de vannage 8 se trouve en regard de la rainure et plus particulièrement en regard de la sortie de fluide 7d, alors le joint se trouve moins comprimé et il est par conséquent moins sujet à se déchirer lors de son passage face à la sortie de fluide 7d.

A cette fin, la sortie de fluide 7d débouche au fond de la rainure annulaire, préférentiellement à équidistance des chanfreins annulaires de cette rainure annulaire.

L'appareillage 1 selon l'invention comporte également au moins un capteur d'effort 9 agencé pour mesurer des efforts appliqués sur l'échantillon 2 se trouvant dans la zone de réception d'échantillon 5 et au moins un capteur de pression 10 agencé pour mesurer une pression hydraulique / hydrostatique à l'intérieur de la chambre 3.

Ledit au moins un capteur d'effort 9 pourrait être agencé pour que lesdits efforts appliqués sur l'échantillon 2 soient mesurés directement au contact de la tête mobile 6 et/ou directement au contact de l'échantillon 2.

Toutefois cela impliquerait que le capteur d'effort 9 soit exposé mécaniquement dans la chambre au risque de le dégrader.

Pour éviter ces désagréments, il est proposé que le capteur d'effort 9 soit agencé pour que lesdits efforts appliqués sur l'échantillon 2 soient mesurés indirectement par le capteur 9, sans que ce capteur 9 ne soit au contact de la tête mobile 6 et/ou de l'échantillon 2.

A cette fin, le capteur d'effort 9 est placé entre un butoir 11 et une partie fixe de la chambre, en l'occurrence cette partie fixe est une surface d'une l'embase 12 de telle manière que les efforts appliqués sur l'échantillon 2 par la tête mobile 6 soient retransmis via le butoir 11 vers le capteur 9 pour être mesurés tout en maintenant le capteur 9 dans une zone protégée, à distance de la tête mobile 6 et à distance de l'échantillon 2, entre le butoir 11 et l'embase 12.

Comme on le verra ci-après, cette embase 12 forme une partie inférieure de la paroi 4 de chambre 3.

L'appareillage 1 ou le banc d'essai 100 comporte un capteur de déplacement 70 de la tête mobile 6 par rapport à la chambre 3.

Ce capteur de déplacement 70 est fonctionnellement relié à une unité d'enregistrement 80 pour enregistrer des valeurs représentatives de déplacements de la tête mobile mesurés par ledit capteur de déplacement 70.

Ce capteur de déplacement 70 peut être agencé pour mesurer le déplacement de la tige 60 par rapport à la paroi de chambre, par exemple à la manière d'un codeur linéaire.

Grâce à la tête mobile 6, aux capteurs d'effort 9 et de pression 10 et au système de vannage 8, on peut tester dans un environnement contrôlé le comportement mécanique d'un échantillon en réponse à une sollicitation mécanique appliquée sur l'échantillon.

Cette sollicitation mécanique appliquée sur l'échantillon 2 peut être une variation de la pression hydrostatique de la chambre par déplacement de la tige 60 et/ou une variation des efforts appliqués par la tête mobile 6 sur l'échantillon.

L'appareillage selon l'invention est ainsi particulièrement adapté pour caractériser les propriétés mécaniques d'un matériau compressible, comme un matériau poreux, lorsqu'il est soumis à une variation d'efforts donnée / contrôlé et à une pression hydrostatique donnée / contrôlée constante ou variable.

Comme illustré sur les figures 1 à 2c, la tête mobile 6 est une tête de compression agencée pour pouvoir compresser l'échantillon 2 se trouvant dans la zone de réception 5 de l'échantillon, entre la tête mobile 6 et le butoir 11 placés dans la chambre 3.

Autrement dit, ce butoir 11 et ladite au moins une tête mobile 6 sont disposés de part et d'autre de la zone de réception d'échantillon 5 pour pouvoir sélectivement compresser l'échantillon 2 entre la tête 6 et le butoir 11.

Le butoir 11, est agencé pour transmettre les efforts de compression qu'il reçoit vers le capteur d'effort 9 qui est lui-même en appui contre une surface de la paroi 4 de chambre 4, cette surface étant ici une surface de l'embase 12.

Ainsi, ledit au moins un capteur d'effort 9 qui est entre le butoir 11 et la surface de l'embase 12 est disposé pour mesurer la force d'appui de l'échantillon 2 contre le butoir 11.

Comme on le comprend des figures 1 à 2c, la tête mobile 6 est portée à l'extrémité d'une tige coulissante 60 qui coulisse à étanchéité au travers de la paroi 4 de la chambre 3.

En l'occurrence la tige coulissante 60 coulisse à étanchéité au travers d'une portion supérieure 4b de la paroi 4 de la chambre 3.

La tige coulissante 60 permet de transmettre un effort de compression uni axiale du matériau de l'échantillon 2 et, lorsque le dispositif de vannage hydraulique est en configuration d'isolement de la chambre, de commander la variation de pression hydrostatique dans la chambre.

Il est à noter qu'en compression uni axiale (figure 2a), on préfère que la chambre 3 ne soit pas remplie d'un liquide. Elle peut être éventuellement remplie d'un gaz pour réaliser des essais de compression uni axiale sous atmosphère contrôlée.

Dans certains modes de réalisation, la tige coulissante 60 peut appartenir à un piston de l'appareillage 1 selon l'invention.

Toutefois, dans le mode de réalisation préférentiel illustré à la figure 1, cette tige coulissante 60 forme une interface entre une tige d'un piston 102 qui appartient au banc d'essai 100 sur lequel l'appareillage 1 est assemblé de manière amovible.

Ainsi, l'appareillage 1 est agencé pour être assemblé sur un banc d'essai 100 usuellement disponible dans les laboratoires de résistance des matériaux pour apporter, à moindre frais, une option de caractérisation d'échantillons dans un environnement hydrostatique contrôlé en pression.

Préférentiellement, l'appareillage 1 comporte une embase 12 fixée de manière amovible, par exemple via des brides de serrage (non représentées), sur la base 101 qui appartient au banc d'essai 100.

Les capteurs d'effort 9 et de pression 10 sont fixés sur l'embase 12 et une portion inférieure de la paroi de la chambre 4 est définie par une face de l'embase 12.

Le circuit hydraulique 7 comporte une conduite d'admission de fluide hydraulique 7a qui débouche à l'intérieur de la chambre 3, cette conduite d'admission 7a passant au travers de l'embase 12.

Ainsi, l'embase 12 forme une portion inférieure de la paroi 4 de la chambre 3 qui porte les capteurs d'effort 9 et de pression 10 tout en permettant le passage de la conduite d'admission 7a.

De cette manière les connexions fonctionnelles nécessaires à la transmission des mesures des capteurs 9, 10 et à l'alimentation en fluide de l'appareillage 1 sont regroupées sur une même embase 12 en partie basse de l'appareillage.

La liaison avec des équipements périphériques de l'appareillage 1 et le positionnement de l'appareillage 1 sur le banc d'essai 100 sont ainsi largement facilités car localisés au niveau de l'embase.

Le circuit hydraulique 7 comporte aussi un clapet antiretour 7a1 disposé pour, d'une part autoriser le passage de fluide hydraulique au travers de la conduite d'admission 7a et vers la chambre et pour, d'autre part s'opposer au passage de fluide hydraulique de la chambre 3 vers la conduite d'admission 7a.

En l'occurrence, ce clapet antiretour 7a1 est ici constitué par une bille mobile dans la conduite 7a entre :
- une restriction formée dans la conduite d'admission de fluide 7a pour s'opposer au passage de la bille dans la chambre 3 tout en autorisant le passage de fluide autour de la bille vers la chambre 3 ; et
- un siège formé dans la conduite d'admission de fluide 7a contre lequel la bille peut venir en appui étanche afin de s'opposer au passage de fluide de la chambre 3 vers la conduite 7a.

Le circuit hydraulique 7 peut aussi comporter une pompe 7b couplée hydrauliquement à la conduite d'admission 7a afin de forcer le passage de fluide hydraulique d'une réserve de fluide 7c vers l'intérieur de la chambre 3 en passant par la conduite d'admission de fluide hydraulique 7a.

L'actionneur 102 qui appartient au banc d'essai 100 est quant à lui fixé sur une structure 103 du banc d'essai qui liée mécaniquement à ladite base 101. Cet actionneur 102 est par exemple un piston 102 venant en appui sur la tige coulissante 60 pour en commander le déplacement / coulissement.

La structure 103 et la base 101 sont agencées pour définir un espace dans lequel est positionnée l'embase 12 et la chambre 3 de l'appareillage 1, la distance entre la structure 103 et la base 101 étant invariable au moins pendant toute la durée de l'essai.

La tige coulissante 60 est préférentiellement assemblée de manière démontable vis-à-vis de la tige du piston 102 du banc d'essai 100 et de manière que la tige coulissante 60 et la tige du piston 102 soient assujetties l'une à l'autre en déplacement.

De cette manière, c'est le déplacement de la tige de piston 102 du banc d'essai 100 qui permet de commander le déplacement de la tige coulissante 60 de l'appareillage 1.

Ce mode de réalisation est économique à mettre en œuvre puisqu'il n'est pas nécessaire d'équiper l'appareillage d'un actionneur.

L'assemblage entre la tige de piston 102 et la tige coulissante 60 peut se faire par de multiples moyens connus comme un assemblage tenon mortaise bloqué par une bride.

Le dispositif de vannage 8 comprend une surface d'étanchéité 8a portée par la tige coulissante 60.

En l'occurrence, la surface d'étanchéité 8a est une surface latérale externe d'un joint porté par la tige coulissante 60.

Une sortie de fluide 7d est pratiquée au travers de la paroi de la chambre 3.

Ladite surface d'étanchéité 8a est agencée pour que, sur une première partie de course de la tige coulissante 60, la surface d'étanchéité 8a autorise le passage de fluide via la sortie de fluide 7d, le dispositif de vannage hydraulique étant alors en configuration d'évacuation de fluide hors de la chambre.

Ladite surface d'étanchéité 8a est également agencée pour que, sur une seconde partie de course de la tige coulissante 60 ladite surface d'étanchéité interdise le passage de fluide via la sortie de fluide 7d, le dispositif de vannage hydraulique étant alors en configuration d'isolement de la chambre.

En d'autres termes, lorsque la tige coulissante 60 est sur sa première partie de course qui est distincte de ladite seconde partie de course, la surface d'étanchéité 8a autorise le passage de fluide hors de la chambre 3 vers la sortie de fluide 7d, le dispositif de vannage hydraulique 8 étant alors en configuration d'évacuation de fluide hors de la chambre.

Lorsque la tige coulissante 60 est sur sa seconde partie de course, sa surface d'étanchéité 8a est alors entre la sortie de fluide 7d et la chambre 3 pour interdire le passage de fluide de la chambre 3 vers la sortie de fluide 7d, le dispositif de vannage hydraulique 8 étant alors en configuration d'isolement pour s'opposer à tout transfert de fluide entre la chambre et l'extérieur de la chambre.

Ainsi, la tige coulissante 60 est utilisée pour :
- appliquer des efforts / forces sur l'échantillon (via la tête mobile portée par la tige coulissante 60) ; et pour
- sélectivement obturer la sortie de fluide de la chambre et ainsi faire varier la pression hydrostatique dans la chambre en fonction de l'effort appliqué sur la tige 60.

Ceci est avantageux car il permet, à l'aide d'un seul actionneur 102 couplé à la tige coulissante 60, de faire varier les efforts appliqués sur l'échantillon (au moins sur la première partie de la course de la tige 60), et sur la seconde partie de course de la tige 60, de faire varier la pression hydrostatique dans la chambre 3 et par conséquent de déformer l'échantillon 2 sous l'effet de la variation de pression hydrostatique.

Selon une première approche, la mesure de la variation de volume de l'échantillon en fonction de la pression hydrostatique appliquée peut être estimé en fonction d'une mesure de déplacement de la tige coulissante 60 par rapport à la paroi 4 de chambre 3.

En effet, la variation du volume de l'échantillon correspondant au volume de la tige 60 introduit dans la chambre alors que le dispositif de vannage 8 est en configuration d'isolement. Le volume de tige introduit dans la chambre alors que le dispositif de vannage 8 est en configuration d'isolement est égal à la section transversale de la tige 60 multipliée par la distance d'enfoncement de la tige 60 dans la chambre à compter du moment où la configuration d'isolement est adoptée.

Une autre approche de calcul de la variation de volume de l'échantillon sera présentée par la suite en conjonction avec l'usage d'une ou plusieurs caméras.

Suivant cette autre approche, la déformation longitudinale de l'échantillon est obtenue à partir du déplacement de la tige 60 mesurée par le capteur de déplacement 70 et la déformation diamétrale de l'échantillon est obtenue par l'analyse d'images enregistrées pendant l'essai au travers des hublots 40.

Cet appareillage 1 permet de réaliser :
- des essais en sollicitation simple par application d'efforts sur l'échantillon via la tête mobile 6, sans variation de pression hydrostatique ; ou
- des essais en sollicitation simple par application d'une variation de pression hydrostatique sans application d'efforts par la tête mobile ; ou
- des essais en sollicitation mixte combinant / phasant chronologiquement :
   - une sollicitation par application d'efforts sur l'échantillon via la tête mobile en fonction du déplacement de la tige 60 (typiquement une sollicitation de type compression uni axiale) ; et
   - une sollicitation par compression hydrostatique de l'échantillon, cette dernière sollicitation étant également contrôlée par déplacement de la tige 60 qui est également contrôlé par le déplacement du piston 102.

La simplicité de fonctionnement de l'appareillage 1 permet de reproduire fidèlement une condition d'essai sur plusieurs essais consécutifs pour mesurer les comportements d'un ou plusieurs échantillons.

Comme on le voit sur les figures 1 à 2c, la sortie de fluide 7d débouche à l'intérieur de la chambre 3, au sommet de cette chambre.

Ceci permet une meilleure évacuation des gaz via le sommet de la chambre, de manière à facilement remplir la chambre en fluide hydraulique par nature liquide et incompressible. On peut ainsi mesurer le comportement de l'échantillon alors qu'il est complètement immergé dans le fluide hydraulique tout en évitant les perturbations / approximations induites par la présence d'un gaz compressible (autre que celui éventuellement contenu dans l'échantillon).

Comme illustré sur les figures 1 à 2c, l'appareillage 1 comporte également une entretoise de programmation 61 assemblée entre ladite au moins une tête mobile 6 et ladite extrémité de la tige coulissante 60.

La tête mobile 6 a une position par rapport à l'extrémité de la tige coulissante 60 qui est fixée / déterminée par une dimension propre, en l'occurrence la longueur, de ladite entretoise de programmation 61.

Cette entretoise de programmation 61 est sélectivement amovible pour varier la position de la tête mobile 6 par rapport à l'extrémité de la tige coulissante 60.

En compression hydrostatique simple (figure 2b), la cellule est remplie d'un liquide supposé incompressible et l'entretoise de programmation 61 est soit enlevée soit remplacée par une entretoise 61 dimensionnée pour que l'échantillon 2 fixé sur le mors supérieur 6a ne touche pas le butoir 11 pendant toute la durée de l'essai hydrostatique simple.

Pendant l'essai hydrostatique simple, le déplacement de la tige 60 engendre une variation de volume intérieur de la chambre. Cette variation de volume est directement imposée à l'échantillon 2. La mesure de la pression (induite par la réaction de l'échantillon) dans la cellule est obtenue à partir du capteur de pression 10. Comme indiqué précédemment, la déformation volumique de l'échantillon peut être obtenue à partir de la mesure de déplacement de la tige 60 réalisée par le capteur 70 et/ou grâce à l'analyse des images de l'échantillon générées par la / les caméras 20 et enregistrées pendant l'essai.

En compression mixte (uni axiale et hydrostatique, figure 2c), la chambre est remplie d'un liquide. La longueur de l'entretoise de programmation 61 est choisie pour que sur une première partie de course de la tige, l'échantillon soit en appui contre le butoir 11 et subisse une compression uni axiale alors que le dispositif de vannage 8 est en configuration de d'évacuation de fluide via la sortie 7d et que sur une seconde partie de course de la tige le dispositif de vannage soit en configuration d'isolement de la chambre (la tige 60 joue le rôle de distributeur), l'échantillon étant à la fois comprimé de manière axiale entre la tête 6 et le butoir 11 et comprimé de manière hydrostatique par la pression hydrostatique ambiante du liquide (fluide hydraulique) dans la chambre 3 sous l'effet du seul déplacement de la tige 60.

Dans cette configuration mixte de compression axiale et hydrostatique, l'effort axial est mesuré par le capteur de force 9, la pression par le capteur 10, la déformation axiale de l'échantillon par la mesure de déplacement de la tige 60 réalisée par le capteur 70 et la variation de volume de l'échantillon est calculée par analyse des images délivrées par la / les caméras 20.

Il est à noter que dans des plans de coupes transversales perpendiculaires à une direction longitudinale de la tige coulissante 60, la tige coulissante 60 présente une section transversale supérieure à la section transversale de l'entretoise de programmation 61.

Ceci permet de faciliter l'assemblage de l'appareillage 1 puisque l'entretoise de programmation 61 (de section inférieure à la section de la tige 60) peut être insérée dans la chambre 3 en passant par l'alésage où coulisse la tige 60.

Préférentiellement, l'appareillage 1 selon l'invention comporte un jeu d'entretoises de programmation 61 de différentes dimensions, chaque entretoise de programmation donnée 61 du jeu d'entretoises étant adaptée pour être assemblée entre ladite au moins une tête mobile 6 et ladite extrémité de la tige coulissante 60.

De cette manière, l'opérateur peut sélectionner une entretoise de programmation 61 ou une combinaison de plusieurs entretoises de programmation 61 pour définir la distance fixe entre ladite au moins une tête mobile 6 et ladite extrémité de la tige coulissante 60 et ainsi définir le phasage entre l'étape de compression uni axiale et l'étape de compression hydrostatique, en fonction de la position de coulissement de la tige coulissante 60.

Pour une dimension donnée d'échantillon 2, la définition de la distance entre la tête mobile 6 et l'extrémité de la tige coulissante permet de fixer :
- la distance de déplacement de la tige 60 nécessaire pour commencer l'application d'effort par la tête mobile 6 sur l'échantillon 2 ; et
- la distance de déplacement de la tige coulissante 60 nécessaire pour que le dispositif de vannage hydraulique 8 passe de sa configuration d'évacuation de fluide à sa configuration d'isolement.

L'entretoise de programmation 61 est ici en forme de cylindre droit, la tête mobile 6 étant reliée à la tige coulissante 60 par l'intermédiaire d'une pièce de liaison 62 qui traverse l'entretoise de programmation 61.

Cette pièce de liaison 62 comporte une partie d'extrémité vissée dans un taraudage complémentaire formé dans la tige coulissante 60 de manière à maintenir l'entretoise de programmation 61 serrée entre la tête mobile 6 et la tige coulissante 60.

Comme illustré sur les figures 1 à 2c, la paroi 4 de la chambre 3 comporte une portion supérieure amovible formant un couvercle supérieur 4b d'obturation d'une ouverture supérieure de la chambre 3.

La tige coulissante 60 coulisse à étanchéité au travers d'un passage traversant ce couvercle supérieur 4b.

La tête mobile 6 et l'entretoise de programmation 61 sont respectivement dimensionnées pour pouvoir passer au travers de l'ouverture supérieure de la chambre.

En d'autres termes, la paroi de chambre comporte une portion intermédiaire 4c présentant ladite ouverture supérieure de la portion intermédiaire 4c.

Le couvercle 4b est assemblé de manière amovible et étanche contre la paroi intermédiaire 4c pour y obturer l'ouverture supérieure de la chambre tout en guidant le déplacement de la tige coulissante 60 au travers du passage traversant le couvercle supérieur 4b.

Avec cette conception, il est possible d'introduire un échantillon de grande taille via cette ouverture supérieure.

Préférentiellement, la tête mobile 6 comporte un mors supérieur 6a pour y fixer une portion de l'échantillon de matériau 2 par serrage du mors supérieur 6a autour d'une partie de l'échantillon 2.

De cette manière, l'échantillon est simplement positionné dans la chambre puisqu'il est uniquement porté par le mors 6a de la tête mobile 6.

La paroi 4 de la chambre 3 comporte au moins un hublot 40 pour visualiser, depuis l'extérieur de la chambre 3, l'échantillon se trouvant dans la zone de réception 5 d'échantillon.

Dans le cas présent, l'appareillage 1 comporte deux paires de hublots.

Les hublots d'une paire donnée de hublots 40 sont alignés suivant une direction d'alignement propre à cette paire donnée de hublots.

Les directions d'alignement des paires de hublots sont perpendiculaires l'une par rapport à l'autre.

De cette manière, l'échantillon dans la chambre peut être observé depuis plusieurs points d'observation disposés tout autour de l'échantillon.

Pour faciliter l'observation de l'échantillon, l'appareillage 1 comporte au moins une caméra 20 pour générer des images d'échantillon se trouvant dans la zone de réception 5 d'échantillon.

Idéalement, chaque au moins une caméra 20 est placée face à un hublot 40 qui lui correspond.

L'appareillage présenté comporte une seule caméra, mais il pourrait comporter une caméra par hublot, chaque caméra étant orientée pour observer la zone de réception d'échantillon.

L'appareillage 1 comporte une unité d'enregistrement 80 qui est fonctionnellement reliée à chaque au moins une caméra 20 afin d'enregistrer des caractéristiques dimensionnelles de l'échantillon observables sur des images générées par chacune desdites au moins une caméra.

Préférentiellement, l'unité d'enregistrement 80 est aussi fonctionnellement reliée audit au moins un capteur d'effort 9 et audit au moins un capteur de pression 10 afin d'enregistrer des signaux délivrés ledit au moins un capteur d'effort 9 et par ledit au moins un capteur de pression 10.

L'unité d'enregistrement 80 comporte un support d'enregistrement 81 où sont stockées les données enregistrées.

Par ailleurs, le banc d'essai 100 ou éventuellement l'appareillage 1 selon l'invention peut aussi comporter une unité de commande 90 qui est fonctionnellement reliée à l'actionneur 102 du banc d'essai 100 pour commander le déplacement de la tige coulissante 60.

Cette une unité de commande 90 peut aussi être fonctionnellement reliée à l'unité d'enregistrement 80 afin de commander l'enregistrement des signaux délivrés par ledit au moins un capteur d'effort 9, par ledit au moins un capteur de pression 10 et pour commander l'enregistrement des valeurs représentatives de déplacements de la tête mobile 6 mesurées par ledit capteur de déplacement 70.

Cette une unité de commande 90 peut aussi être fonctionnellement reliée à ladite pompe 7b du circuit hydraulique 7 afin de commander le remplissage de la chambre en fluide hydraulique.

L'appareillage 1 peut aussi être équipé d'un détecteur de niveau de fluide agencé pour signaler un état de remplissage de la chambre en fluide hydraulique, ce détecteur de niveau de fluide étant préférentiellement disposé au niveau de la sortie 7d et étant préférentiellement relié à ladite unité de commande 90.

Dans ce mode de réalisation, l'unité de commande 90 est agencée pour commander l'actionneur 102 responsable du déplacement de la tige 60 en fonction d'un signal de mesure de niveau de fluide dans la chambre délivré par le détecteur de niveau.

Par ailleurs, l'unité d'enregistrement 80 peut délivrer à l'unité de commande 90, des valeurs paramétriques de l'essai à réaliser, comme une consigne particulière de déplacement de la tige 60 (consigne en vitesse et/ou position), une consigne particulière d'efforts à appliquer sur la tige 60.

L'enregistrement des signaux des différents capteurs 9, 10, 70, et caméras 20, pendant le déroulement de l'essai permet de mémoriser une chronologie des efforts appliqués par la tête mobile 6, des pressions hydrauliques appliquées par le fluide hydraulique ainsi que le comportement mécanique de l'échantillon 2 en réponse à ces sollicitations.

Préférentiellement, l'appareillage 1 comprend aussi une unité de calcul de variation de volume de l'échantillon générant une valeur représentative d'une variation de volume de l'échantillon :
- en fonction d'une valeur de déplacement mesuré de ladite tige coulissante 60 par rapport à la paroi 4 de chambre 3 ; et/ou
- en fonction desdites caractéristiques dimensionnelles de l'échantillon 2 observables sur des images générées par chacune desdites au moins une caméra 20 et/ou ;
- en fonction de la valeur de déplacement mesurée de ladite au moins une tige coulissante 60 et desdites caractéristiques dimensionnelles de l'échantillon 2 observables sur des images générées par chacune desdites au moins une caméra 20.

Comme le fluide hydraulique contenu dans la chambre est incompressible, la variation de volume de l'échantillon soumis à une variation de pression hydrostatique donnée correspond à la variation du volume interne de la chambre induite par le déplacement de la tige coulissante 60, c'est-à-dire par déplacement de la tige du piston 102.

Ainsi, l'appareillage 1 selon l'invention permet de calculer une variation de volume de l'échantillon en fonction d'une valeur mesurée de déplacement de la tige coulissante 60, en prenant éventuellement en compte la compressibilité du fluide hydraulique et/ou la capacité de déformation de la paroi de la chambre en fonction d'une pression hydrostatique donnée mesurée par le capteur de pression 10.

Le comportement de l'échantillon est caractérisé :
- en fonction de la variation de pression, de la variation du volume de l'échantillon) ; et/ou
- en fonction d'efforts appliqués sur l'échantillon par la tête mobile et/ou
- en fonction d'images de l'échantillon obtenues par la ou les caméras 20.

La figure 3 illustre :
- un essai réalisé sur un échantillon de matériau poreux à l'aide de l'appareillage 1 selon l'invention ; et
- des courbes limites de comportement du matériau CL1, CL2 qui peuvent être déduites à l'aide des résultats de plusieurs essais.

La courbe C1 de la figure 3 représente un chemin de chargement C1 imposé / appliqué à un échantillon de matériau poreux pour caractériser le comportement théorique du matériau s'il était soumis à d'autres chemins de chargement théoriques.

L'abscisse du plan des contraintes correspond à une sollicitation interne à l'échantillon par compression hydrostatique p.

Comme l'échantillon 2 est enfermé dans une gaine hermétique 2a, la variation de volume de l'échantillon conjuguée à la mesure de pression hydrostatique dans la chambre permet d'en déduire la pression hydrostatique p courante dans l'échantillon.

Dans cet exemple, le premier chemin de chargement C1 est imposé par l'appareillage 1 en déplaçant la tige 60 qui porte la tête mobile 6 par rapport à la chambre 3 remplie de fluide hydraulique.

Ce chemin de chargement C1 comprend d'abord un chargement uni axial (partie C1a de la courbe) réalisé en déplaçant la tête mobile 6 pour comprimer l'échantillon 2 contre le butoir 11 alors que le système de vannage 8 est en configuration d'évacuation de fluide.

Ainsi, sur cette partie C1a, malgré l'introduction de la tige 60 dans la chambre 3, la pression hydrostatique dans la chambre reste constante puisque le fluide s'échappe librement via la sortie de fluide.

La courbe droite C1a montre une croissance de pression hydrostatique dans l'échantillon car l'échantillon est compressé alors qu'il est fermé dans la gaine étanche.

Ce chemin de chargement C1 comprend ensuite un chargement mixte (partie C1b de la courbe) associant la compression de l'échantillon entre la tête mobile 6 et le butoir 11 avec une compression hydrostatique car, au point Cx, le système de vannage 8 passe en configuration d'isolement pour faire augmenter la pression hydrostatique dans la chambre et dans l'échantillon au fur et à mesure que l'on augmente la force de compression appliquée sur la tige 60. En réalisant plusieurs essais successifs suivant des chemins de chargements différents, on peut en déduire des courbes limites CL1 et CL2 propres à l'échantillon et qui permettent de prédire le comportement théorique du matériau de l'échantillon pour d'autres chemins de chargement.

Chaque courbe limite CL1 et CL2 exprime une limite de comportement du matériau en cisaillement q en fonction de la pression hydrostatique p dans le matériau.

La courbe CL1 est par exemple une limite de déformation élastique et la courbe CL2 est par exemple une limite de déformation plastique.

Par expérience, il apparait que chaque courbe limite CL1, CL2 est en forme de demi ellipse.

L'axe d'abscisse est l'axe limite de chacune de ces demi ellipses et il forme aussi l'axe de symétrie de chacune des ellipses complètes auxquelles appartiennent ces demi ellipses CL1, CL2.

En réalisant un essai en compression uni axiale, on détermine une droite C1x par laquelle passe la demi ellipse, le point d'intersection C10 entre la demi-ellipse et la droite C1x correspondant à un changement de comportement élastique ou plastique notable de l'échantillon.

En réalisant un essai en chargement mixte suivant la courbe C1, on détermine un second point C11 de la demi-ellipse qui correspond également à un changement notable de comportement de l'échantillon, comme le passage du domaine de déformation exclusivement élastique au domaine de déformation plastique.

En renouvelant l'essai avec d'autres chemins de chargement mixtes, on peut définir au moins un troisième point de la demi ellipse CL1.

A l'aide de ces trois points ou plus de la demi ellipse, on peut extrapoler la courbe générale de la demi ellipse CL1 ce qui permet de connaitre une limite de comportement de l'échantillon valable pour une pluralité de chemins de chargement théoriques.

La même méthode est appliquée pour déterminer la courbe CL2.

Bien entendu, l'invention n'est pas limitée au mode de réalisation décrit mais englobe toute variante entrant dans le champ de l'invention telle que définie par les revendications.

Ainsi, la tête mobile 6 pourrait être pivotante pour appliquer un couple contrôlé sur l'échantillon de matériau afin d'en caractériser son comportement en torsion et/ou son comportement en flexion sous une pression hydrostatique contrôlée.

## Revendications

1. Appareillage (1) pour la réalisation d'essais sur un échantillon de matériau (2), l'appareillage comprenant :
- une chambre (3) délimitée extérieurement par une paroi (4) de chambre (3) et dans laquelle est aménagée une zone de réception (5) dudit échantillon de matériau (2) ;
- au moins une tête mobile (6) par rapport à ladite paroi de chambre (4) entre une première position dans laquelle la tête mobile (6) est à l'écart de la zone de réception d'échantillon (5) et une seconde position dans laquelle la tête mobile (6) se trouve dans la zone de réception d'échantillon (5) pour appliquer des efforts sur l'échantillon (2), l'appareillage (1) comportant un circuit hydraulique (7) et un dispositif de vannage hydraulique (8) adoptant sélectivement une configuration d'isolement de la chambre (3) dans laquelle la chambre est hermétique et une configuration d'évacuation de fluide hors de la chambre (3) dans laquelle du fluide peut être évacué hors de la chambre via ledit circuit hydraulique (7), l'appareillage (1) comportant également au moins un capteur d'effort (9) agencé pour mesurer des efforts appliqués sur l'échantillon se trouvant dans la zone de réception d'échantillon (5) et au moins un capteur de pression (10) agencé pour mesurer une pression hydraulique à l'intérieur de la chambre (3), ladite au moins une tête mobile (6) étant portée à l'extrémité d'une tige coulissante (60) qui coulisse à étanchéité au travers de la paroi (4) de la chambre (3), **caractérisé en ce que** le dispositif de vannage comprend une surface d'étanchéité (8a) portée par la tige coulissante (60) et une sortie de fluide (7d) pratiquée au travers de la paroi de la chambre, la surface d'étanchéité étant agencée :
- d'une part pour que sur une première partie de course de la tige coulissante (60), la surface d'étanchéité (8a) autorise le passage de fluide via la sortie de fluide (7d), le dispositif de vannage hydraulique étant alors en configuration d'évacuation de fluide hors de la chambre ; et
- d'autre part pour que sur une seconde partie de course de la tige coulissante (60), ladite surface d'étanchéité (8a) interdise le passage de fluide via la sortie de fluide (7d), le dispositif de vannage hydraulique étant alors en configuration d'isolement de la chambre.

2. Appareillage (1) selon la revendication 1, comportant un butoir (11) placé dans la chambre (3), le butoir (11) et ladite au moins une tête mobile (6) étant disposés de part et d'autre de la zone de réception d'échantillon (5) pour pouvoir sélectivement compresser ledit échantillon (2) entre le butoir (11) et ladite au moins une tête mobile (6), ledit au moins un capteur d'effort (9) étant disposé pour mesurer une force d'appui de l'échantillon (3) contre le butoir (11).

3. Appareillage (1) selon l'une quelconque des revendications 1 ou 2, comportant une embase (12), ledit au moins un capteur d'effort (9) et ledit au moins un capteur de pression (10) étant fixés sur ladite embase (12), une portion inférieure de la paroi de la chambre (4) étant définie par une face de l'embase (12).

4. Appareillage selon la revendication 3, dans lequel le circuit hydraulique (7) comporte une conduite d'admission de fluide hydraulique (7a) débouchant à l'intérieur de la chambre (3).

5. Appareillage (1) selon la revendication 4, dans lequel la conduite d'admission (7a) passe au travers de l'embase (12).

6. Appareillage selon l'une quelconque des revendications 4 ou 5, dans lequel le circuit hydraulique comporte un clapet antiretour (7a1) disposé pour d'une part autoriser le passage de fluide hydraulique au travers de la conduite d'admission et vers la chambre et pour d'autre part s'opposer au passage de fluide hydraulique de la chambre vers la conduite d'admission.

7. Appareillage selon l'une quelconque des revendications 1 à 6, dans lequel la sortie de fluide (7d) débouche à l'intérieur de la chambre (3), au sommet de cette chambre.

8. Appareillage selon l'une quelconque des revendications 1 à 7, comprenant au moins une entretoise de programmation assemblée entre ladite au moins une tête mobile et ladite extrémité de la tige coulissante (60), la tête mobile (6) ayant une position par rapport à l'extrémité de la tige coulissante qui est fixée par au moins une dimension propre de ladite au moins une entretoise de programmation (61), ladite entretoise de programmation (61) étant sélectivement amovible pour varier ladite position de la tête mobile (6) par rapport à l'extrémité de la tige coulissante (60).

9. Appareillage selon l'une quelconque des revendications 1 à 8, dans lequel la paroi (4) de la chambre (3) comporte une portion supérieure amovible formant un couvercle supérieur (4b) d'obturation d'une ouverture supérieure de la chambre (3), ladite tige coulissante (60) coulissant à étanchéité au travers d'un passage traversant le couvercle supérieur (4b), la tête mobile (6) étant dimensionnée pour pouvoir passer au travers de l'ouverture supérieure de la chambre.

10. Appareillage (1) selon l'une quelconque des revendications 1 à 9, dans lequel la tête mobile (6) comporte un mors supérieur (6a) pour y fixer une portion de l'échantillon de matériau (2) par serrage du mors supérieur (6a) autour d'une partie d'échantillon (2).

11. Appareillage selon l'une quelconque des revendications 1 à 10, dans lequel la paroi (4) de la chambre (3) comporte au moins un hublot (40) pour visualiser, depuis l'extérieur de la chambre (3), un échantillon se trouvant dans la zone de réception d'échantillon.

12. Appareillage selon l'une quelconque des revendications 1 à 11, dans lequel la paroi de la chambre comporte plusieurs paires de hublots, les hublots d'une paire de hublots étant placés de part et d'autre de la zone de réception d'échantillon et chaque hublot étant agencé pour visualiser, depuis l'extérieur de la chambre, un échantillon se trouvant dans la zone de réception d'échantillon.

13. Appareillage selon l'une quelconque des revendications 1 à 12, comportant une unité d'enregistrement (80) fonctionnellement reliée audit au moins un capteur d'effort (9) et audit au moins un capteur de pression (10) afin d'enregistrer des signaux délivrés ledit au moins un capteur d'effort et par ledit au moins un capteur de pression.

14. Appareillage selon la revendication 13, comportant un capteur de déplacement (70) de la tête mobile par rapport à la chambre (3), le capteur de déplacement (70) étant fonctionnellement relié à ladite unité d'enregistrement (80) pour enregistrer des valeurs représentatives de déplacements de la tête mobile mesurés par ledit capteur de déplacement (70).

15. Appareillage selon l'une quelconque des revendications 13 ou 14, comportant au moins une caméra (20) pour générer des images d'échantillon se trouvant dans la zone de réception (5) d'échantillon.

16. Appareillage selon la revendication 15, dans lequel l'unité d'enregistrement (80) est fonctionnellement reliée à chaque au moins une caméra (20) afin d'enregistrer des caractéristiques dimensionnelles de l'échantillon observables sur des images générées par chacune desdites au moins une caméra.

17. Appareillage selon la revendication 16, comprenant une unité de calcul de variation de volume de l'échantillon générant une valeur représentative d'une variation de volume de l'échantillon en fonction d'une valeur de déplacement mesuré de ladite tige coulissante (60) par rapport à la paroi (4) de chambre (3) ou en fonction desdites caractéristiques dimensionnelles de l'échantillon (2) observables sur des images générées par chacune desdites au moins une caméra (20) ou en fonction de la valeur de déplacement mesurée de ladite au moins une tige coulissante (60) et desdites caractéristiques dimensionnelles de l'échantillon (2) observables sur des images générées par chacune desdites au moins une caméra (20).

18. Ensemble (0) comportant un banc d'essai (100) et un appareillage (1) selon l'une quelconque des revendications 1 à 17, ledit appareillage (1) étant fixé de manière amovible sur une base (101) appartenant au banc d'essai (100) et le banc d'essai (100) comprenant un actionneur (102) pour forcer le déplacement de ladite tête mobile (6) par rapport à la paroi de chambre (4).

19. Ensemble (0) selon la revendication 18, comprenant également un échantillon de matériau (2) disposé dans la zone de réception d'échantillon (5).

20. Ensemble (0) selon la revendication 19 dans lequel, l'échantillon (2) est entouré d'une gaine de protection de l'échantillon, ladite gaine étant déformable et s'opposant au passage de fluide hydraulique vers l'intérieur de l'échantillon.

## Patentansprüche

1. Apparatur (1) zur Durchführung von Tests an einer Materialprobe (2), wobei die Apparatur umfasst:
- eine Kammer (3), die nach außen hin von einer Wand (4) der Kammer (3) begrenzt ist und in welcher ein Aufnahmebereich (5) zur Aufnahme der Materialprobe (2) eingerichtet ist;
- zumindest einen beweglichen Kopf (6), der zwischen einer ersten Stellung, in welcher sich der bewegliche Kopf (6) außerhalb des Probenaufnahmebereichs (5) befindet, und einer zweiten Stellung, in welcher sich der bewegliche Kopf (6) innerhalb des Probenaufnahmebereichs (5) befindet, um Kräfte auf die Probe (2) auszuüben, beweglich ist, wobei die Apparatur (1) einen Hydraulikkreislauf (7) und ein hydraulisches Ventilsystem (8) enthält, das wahlweise eine Abdichtkonfiguration zur Abdichtung der Kammer (3), in welcher die Kammer hermetisch verschlossen ist, und eine Fluidabführkonfiguration zum Abführen von Fluid aus der Kammer (3), in welcher Fluid über den Hydraulickreislauf (7) aus der Kammer abgeführt werden kann, annimmt, wobei die Apparatur (1) außerdem zumindest einen Kraftsensor (9) enthält, der dafür ausgelegt ist, die auf die Probe im Probenaufnahmebereich (5) ausgeübten Kräfte zu messen, und zumindest einen Drucksensor (10) enthält, der dafür ausgelegt ist, einen Hydraulikdruck im Inneren der Kammer (3) zu messen, wobei der zumindest eine bewegliche Kopf (6) am Ende einer Schiebestange (60) angebracht ist, die abdichtend durch die Wand (4) der Kammer (3) hindurch verschiebbar ist, **dadurch gekennzeichnet, dass** das Ventilsystem eine von der Schiebestange (60) getragene Dichtfläche (8a) und einen durch die Wand der Kammer hindurch ausgebildeten Fluidauslass (7d) umfasst, wobei die Dichtfläche dafür ausgelegt ist, dass:
- einerseits auf einem ersten Wegabschnitt der Schiebestange (60) die Dichtfläche (8a) den Fluiddurchfluss durch den Fluidauslass (7d) hindurch erlaubt, wobei sich in diesem Fall das hydraulische Ventilsystem in der Fluidabführkonfiguration zum Abführen von Fluid aus der Kammer befindet; und
- andererseits auf einem zweiten Wegabschnitt der Schiebestange (60) die Dichtfläche (8a) den Fluiddurchfluss durch den Fluidauslass (7d) hindurch verhindert, wobei sich in diesem Fall das hydraulische Ventilsystem in der Kammerabdichtkonfiguration befindet.

2. Apparatur (1) nach Anspruch 1, enthaltend einen in der Kammer (3) angeordneten Anschlag (11), wobei der Anschlag (11) und der zumindest eine bewegliche Kopf (6) derart auf entgegengesetzten Seiten des Probenaufnahmebereichs (5) angeordnet sind, dass die Probe (2) selektiv zwischen dem Anschlag (11) und dem zumindest einen beweglichen Kopf (6) zusammengedrückt werden kann, wobei der zumindest eine Kraftsensor (9) derart angeordnet ist, dass er eine Andrückkraft der Probe (3) gegen den Anschlag (11) misst.

3. Apparatur (1) nach einem der Ansprüche 1 oder 2, enthaltend eine Grundplatte (12), wobei der zumindest eine Kraftsensor (9) und der zumindest eine Drucksensor (10) an der Grundplatte (12) befestigt sind, wobei ein unterer Wandabschnitt der Kammer (4) durch eine Seite der Grundplatte (12) definiert ist.

4. Apparatur nach Anspruch 3, wobei der Hydraulikkreislauf (7) eine Hydraulikfluid-Zuleitung (7a) enthält, die in das Innere der Kammer (3) mündet.

5. Apparatur (1) nach Anspruch 4, wobei die Zuleitung (7a) durch die Grundplatte (12) hindurchgeführt ist.

6. Apparatur nach einem der Ansprüche 4 oder 5, wobei der Hydraulickreislauf ein Rückschlagventil (7a1) enthält, das derart angeordnet ist, dass es einerseits den Hydraulikfluid-Durchfluss durch die Zuleitung in die Kammer erlaubt und andererseits den Hydraulikfluid-Durchfluss aus der Kammer in die Zuleitung verhindert.

7. Apparatur nach einem der Ansprüche 1 bis 6, wobei der Fluidauslass (7d) am oberen Ende der Kammer in das Innere der Kammer (3) mündet.

8. Apparatur nach einem der Ansprüche 1 bis 7, umfassend zumindest ein Programmations-Zwischenstück, das zwischen dem zumindest einen beweglichen Kopf und dem Ende der Schiebestange (60) angebracht ist, wobei der bewegliche Kopf (6) eine Position in Bezug auf das Ende der Schiebestange aufweist, die von zumindest einer Eigenabmessung des zumindest einen Programmations-Zwischenstücks (61) bestimmt ist, wobei das Programmations-Zwischenstück (61) zur Veränderung der Position des beweglichen Kopfs (6) in Bezug auf das Ende der Schiebestange (60) wahlweise abnehmbar ist.

9. Apparatur nach einem der Ansprüche 1 bis 8, wobei die Wand (4) der Kammer (3) einen abnehmbaren oberen Abschnitt enthält, der einen oberen Abschlussdeckel (4b) zum Verschließen einer oberen Öffnung der Kammer (3) bildet, wobei die Schiebestange (60) abdichtend durch eine Durchführung in dem oberen Deckel (4b) hindurch verschiebbar ist, wobei der bewegliche Kopf (6) derart bemessen ist, dass er durch die obere Kammeröffnung hindurchtreten kann.

10. Apparatur (1) nach einem der Ansprüche 1 bis 9, wobei der bewegliche Kopf (6) eine obere Spannbacke (6a) enthält, an der ein Teil der Materialprobe (2) befestigt wird, indem die obere Spannbacke (6a) um einen Abschnitt der Probe (2) herum festgespannt wird.

11. Apparatur nach einem der Ansprüche 1 bis 10, wobei die Wand (4) der Kammer (3) zumindest ein Bullauge (40) enthält, das dazu dient, den Blick auf eine im Aufnahmebereich befindliche Probe von außerhalb der Kammer (3) aus zu ermöglichen.

12. Apparatur nach einem der Ansprüche 1 bis 11, wobei die Wand der Kammer mehrere Bullaugenpaare enthält, wobei sich die Bullaugen eines Bullaugenpaars jeweils auf gegenüberliegenden Seiten des Probenaufnahmebereichs befinden und jedes Bullauge dafür ausgelegt ist, den Blick auf eine im Aufnahmebereich befindliche Probe von außerhalb der Kammer aus zu ermöglichen.

13. Apparatur nach einem der Ansprüche 1 bis 12, enthaltend eine Aufzeichnungseinheit (80), die derart mit dem zumindest einen Kraftsensor (9) und dem zumindest einen Drucksensor (10) funktionell verbunden ist, dass sie von dem zumindest einen Kraftsensor und dem zumindest einen Drucksensor ausgesendete Signale aufzeichnet.

14. Apparatur nach Anspruch 13, enthaltend einen Wegsensor (70) zur Erfassung der Verfahrbewegung des beweglichen Kopfs in Bezug auf die Kammer (3), wobei der Wegsensor (70) derart mit der Aufzeichnungseinheit (80) funktionell verbunden ist, dass Werte aufgezeichnet werden, die von dem Wegsensor (70) gemessene Verfahrbewegungen des beweglichen Kopfes darstellen.

15. Apparatur nach einem der Ansprüche 13 oder 14, enthaltend zumindest eine Kamera (20), die dazu dient, Bilder von in dem Probenaufnahmebereich (5) befindlichen Proben zu erzeugen.

16. Apparatur nach Anspruch 15, wobei die Aufnahmeeinheit (80) derart mit einer jeden der zumindest einen Kameras (20) funktionell verbunden ist, dass sie Größenmerkmale der Probe aufzeichnet, welche auf von einer jeden der zumindest einen Kameras erzeugten Bildern beobachtbar sind.

17. Apparatur nach Anspruch 16, umfassend eine Probenvolumenänderungs-Berechnungseinheit, die einen eine Volumenänderung der Probe darstellenden Wert erzeugt, und zwar in Abhängigkeit zu einem gemessenen Verfahrwert der Verschiebestange (60) in Bezug auf die Wand (4) der Kammer (3) oder in Abhängigkeit zu den Größenmerkmalen der Probe (2), welche auf von einer jeden der zumindest einen Kameras (20) erzeugten Bildern beobachtbar sind, oder in Abhängigkeit zu dem gemessenen Verfahrwert der zumindest einen Verschiebestange (60) und zu den Größenmerkmalen der Probe (2), die auf von einer jeden der zumindest einen Kameras (20) erzeugten Bildern beobachtbar sind.

18. Anordnung (0), enthaltend einen Prüfstand (100) und eine Apparatur (1) nach einem der Ansprüche 1 bis 17, wobei die Apparatur (1) abnehmbar auf einer zu dem Prüfstand (100) gehörenden Basis (101) befestigt ist und wobei der Prüfstand (100) einen Aktuator (102) umfasst, der die zwangsgeführte Verfahrbewegung des beweglichen Kopfs (6) in Bezug auf die Wand der Kammer (4) bewirkt.

19. Anordnung (0) nach Anspruch 18, außerdem umfassend eine Materialprobe (2), die in dem Probenaufnahmebereich (5) angeordnet ist.

20. Anordnung (0) nach Anspruch 19, wobei die Probe (2) von einer Schutzhülle zum Schutz der Probe umgeben ist, wobei es sich bei der Hülle um eine verformbare Hülle handelt, die ein Eindringen von Hydraulikfluid in das Innere der Probe verhindert.

## Claims

1. Equipment (1) for carrying out tests on a sample of material (2), the equipment comprising:
- a chamber (3) bounded externally by a wall (4) of the chamber (3) and into which is arranged an area (5) for receiving said sample of material (2);
- at least one mobile head (6) with respect to said chamber wall (4) between a first position in which the mobile head (6) is away from the sample receiving area (5) and a second position in which the mobile head (6) is located in the sample receiving area (5) to apply forces to the sample (2), the equipment (1) comprising a hydraulic circuit (7) and a hydraulic valve device (8) selectively adopting a configuration for isolating the chamber (3) in which the chamber is hermetic and a configuration for evacuating fluid from the chamber (3) in which fluid can be evacuated from the chamber via said hydraulic circuit (7), the equipment (1) also comprising at least one force sensor (9) arranged to measure forces applied to the sample located in the sample receiving area (5) and at least one pressure sensor (10) arranged to measure a hydraulic pressure inside of the chamber (3), said at least one movable head (6) being carried at the end of a sliding rod (60) which slides in a sealed manner through the wall (4) of the chamber (3), **characterised in that** the valve device comprises a sealing surface (8a) carried by the sliding rod (60) and a fluid outlet (7d) made through the wall of the chamber, the sealing surface being arranged:
- on the one hand, so that during a first stroke part of the sliding rod (60), the sealing surface (8a) allows the passage of fluid via the fluid outlet (7d), the hydraulic valve device then being in the configuration for evacuating fluid away from the chamber; and
- on the other hand, so that during a second stroke part of the sliding rod (60), said sealing surface (8a) prevents the passage of fluid via the fluid outlet (7d), the hydraulic valve device then being in the configuration for insulating the chamber.

2. Equipment (1) according to claim 1, comprising a stopper (11) placed in the chamber (3), the stopper (11) and said at least one mobile head (6) being arranged on either side of the sample receiving area (5) to be able to selectively compress said sample (2) between the stopper (11) and said at least one mobile head (6), said at least one force sensor (9) being arranged to measure a bearing force of the sample (3) against the stopper (11).

3. Equipment (1) according to any one of claims 1 or 2, comprising a base (12), said at least one force sensor (9) and said at least one pressure sensor (10) being fixed to said base (12), a lower portion of the wall of the chamber (4) being defined by a face of the base (12).

4. Equipment according to claim 3, wherein the hydraulic circuit (7) comprises a hydraulic fluid intake pipe (7a) opening into the chamber (3).

5. Equipment (1) according to claim 4, wherein the intake pipe (7a) passes through the base (12).

6. Equipment according to any one of claims 4 or 5, wherein the hydraulic circuit comprises a non-return valve (7a1) arranged on the one hand to allow the passage of hydraulic fluid through the intake pipe and towards the chamber and on the other hand to oppose the passage of hydraulic fluid from the chamber towards the intake pipe.

7. Equipment according to any one of claims 1 to 6, wherein the fluid outlet (7d) opens into the chamber (3) at the top of that chamber.

8. Equipment according to any one of claims 1 to 7, comprising at least one programming spacer assembled between said at least one movable head and said end of the sliding rod (60), the movable head (6) having a position relative to the end of the sliding rod that is fixed by at least one proper dimension of said at least one programming spacer (61), said programming spacer (61) being selectively removable to vary said position of the movable head (6) relative to the end of the sliding rod (60).

9. Equipment according to any one of Claims 1 to 8, wherein the wall (4) of the chamber (3) comprises a removable upper portion forming an upper cover (4b) for closing an upper opening of the chamber (3), said sliding rod (60) sliding in a sealed manner through a passage passing through the upper cover (4b), the movable head (6) being sized so as to be able to pass through the upper opening of the chamber.

10. Equipment (1) according to any one of claims 1 to 9, wherein the movable head (6) has a top jaw (6a) for securing a portion of the material sample (2) thereto by clamping the top jaw (6a) around a sample portion (2).

11. Equipment according to any one of claims 1 to 10, wherein the wall (4) of the chamber (3) has at least one window (40) for viewing, from outside the chamber (3), a sample located in the sample receiving area.

12. Equipment according to any one of claims 1 to 11, wherein the wall of the chamber comprises a plurality of pairs of windows, the windows of a pair of windows being located on either side of the sample receiving area and each window being arranged for viewing, from outside the chamber, a sample located in the sample receiving area.

13. Equipment according to any one of claims 1 to 12, comprising a recording unit (80) operatively connected to said at least one force sensor (9) and to said at least one pressure sensor (10) in order to record signals delivered by said at least one force sensor and by said at least one pressure sensor.

14. Equipment according to claim 13, comprising a displacement sensor (70) of the movable head relative to the chamber (3), the displacement sensor (70) being operatively connected to said recording unit (80) for recording representative values of movable head displacements measured by said displacement sensor (70).

15. Equipment according to any one of claims 13 or 14, comprising at least one camera (20) for generating sample images located in the sample receiving area (5).

16. Equipment according to claim 15, wherein the recording unit (80) is operatively connected to each of the at least one camera (20) to record observable dimensional characteristics of the sample on images generated by each of the at least one camera.

17. Equipment according to Claim 16, comprising a unit for calculating the variation in volume of the sample generating a value representative of a variation in volume of the sample as a function of a measured displacement value of said sliding rod (60) relative to the wall (4) of the chamber (3) or as a function of said dimensional characteristics of the sample (2) observable in images generated by each of said at least one camera (20) or as a function of the measured displacement value of said at least one sliding rod (60) and of said dimensional characteristics of the sample (2) observable in images generated by each of said at least one camera (20).

18. Assembly (0) comprising a test bench (100) and an equipment (1) according to any one of claims 1 to 17, said equipment (1) being fixed in a removable manner on a base (101) belonging to the test bench (100) and the test bench (100) comprising an actuator (102) for forcing the displacement of said mobile head (6) with respect to the chamber wall (4).

19. Assembly (0) according to claim 18, further comprising a material sample (2) arranged in the sample receiving area (5).

20. Assembly (0) according to claim 19 wherein the sample (2) is surrounded by a protective sheath for the sample, said sheath being deformable and opposing the passage of hydraulic fluid to the inside of the sample.
